# EUROPEAN PATENT SPECIFICATION

(11) **EP 2 090 036 B1**
(45) Date of publication and mention of the grant of the patent: **27.10.2010**
(21) Application number: 07729157.3
(22) Date of filing: 15.05.2007
(51) Int. Cl.: H04W 48/10

(54) **A PORTABLE COMMUNICATION DEVICE WITH AN IMPROVED AD-HOC CONNECTIVITY**
TRAGBARES KOMMUNIKATIONSGERÄT MIT VERBESSERTER AD-HOC-KONNEKTIVITÄT
DISPOSITIF DE COMMUNICATION PORTABLE AVEC UNE CONNECTIVITÉ AD HOC AMÉLIORÉE

(30) Priority: 24.11.2006 US 867153 P
(43) Date of publication of application: 19.08.2009
(73) Proprietor: Sony Ericsson Mobile Communications AB, 221 88 Lund (SE)
(72) Inventor: ANGELHAG, Anders, 227 48 Lund (SE); CAMP, William, Chapel Hill, North Carolina 27514 (US)
(74) Representative: VALEA AB
(86) International application number: PCT/EP2007/054708
(87) International publication number: WO 2008/061810

(56) References cited:
- WO-A-2004/008788
- US-A1- 2006 046 719
- US-A1- 2006 172 711

## Description

### TECHNICAL FIELD OF THE INVENTION

The present invention relates to the field of portable communication devices and more particularly, but not limited to, portable communication devices provided with short range communication abilities for ad hoc communication.

### DESCRIPTION OF RELATED ART

Today there is a trend within the field of portable devices to provide these devices with an ever increasing number of functions. In particular, there is a trend of providing portable devices with an increased ability to handle multimedia items e.g. such as various sounds, images and videos etc. The sounds may *e*.*g*. be music or similar, the images may be photos or similar and the videos may be a movie or similar. The multimedia items may be recorded or downloaded by the portable device. Similarly, various game and amusement items have been introduced into portable devices at an ever increasing rate.

As portable devices have become more competent and more like stationary devices the need for exchanging multimedia items between different devices has become increasingly interesting and necessary. For example, a user may like to watch a movie on the home television or listen to a music piece on the home Hi-Fi system as well as enjoy these items on a portable device. In another situation a user may like to present images or videos recorded by a portable device. It would then be advantageous if these images or video sequences could be easily transferred to a television set or a device connected to a television set for providing a lager monitor that can be easily enjoyed by several viewers. There may also be a need for storing images or videos recorded by a portable device in a stationary memory having a larger storage capacity. Again it would be advantageous if the images and/or video sequences could be easily transferred to the stationary memory. On the whole there are many situations in which it would be advantageous to transfer multimedia items and amusement items between different devices.

A well known and commonly utilized technology for an easy transfer of multimedia and amusement items between different devices is the so-called Wireless Local Area Networks (WLAN:s) and in particularly in the so-called WiFi technology. The WiFi (also known as Wi-Fi, wifi, etc.) is a brand that was originally licensed by the WiFi Alliance to describe the underlying technology of WLAN:s based on the IEEE 802.11 specifications or similar. A person with a WiFi enabled device such as a cell phone or a PDA or similar can e.g. connect to the Internet when in proximity of an access point. The space covered by one or several access points is called a hotspot. WiFi also allows connectivity in peer-to-peer mode, which enables devices to connect directly with each other. This connectivity mode is particularly useful e.g. in consumer electronics and gaming applications and similar.

However, in many homes and offices and other densely populated areas will have several WiFi-equipped devices, and so will their neighbours. Since WiFi devices have rather long range they will to a large extent cover the same space. A problem is then to secure ease of use when connecting a WiFi-equipped portable device to another WiFi device in an environment wherein the portable device finds a plurality of devices (e.g. 5) located in the present room and even more (e.g. 15) devices within WiFi range located at the neighbours?

According to known solutions the user and the portable device scans for WiFi devices. The user then has to select from a long list of compatible devices within range, including devices located at neighbours etc. Over time the user may create a list of favourites, which may simplify the selection. However, the user might end up with a rather long list of favourite devices at home, at the office, in the car and at the summer house etc and the advantages of a list of favourites is reduced.

The patent application WO 2004/008788 (Aflalo) discloses a directional dialing cellular telephone protocol, for use within cellular telephone subscriber community substantially sharing data via a mutual common service provider, including: (A) in the subscriber community, user operating modified cellular telephone unit having directional antenna and software application interfaced thereto; (B) in the subscriber community, user operating modified cellular telephone unit having an omni-directional antenna and software application interfaced thereto, and the omni-directional antenna of the user unit configured to receive signals from the other user unit directional antenna; and (C) the protocol has steps of (i) pointing the directional antenna at the other unit, (ii) activating the software application and thereby sending signal from the directional antenna to the omni-directional antenna, (iii) receiving the signal at the omni-directional antenna and thereby activating the software application, and (iv) software application sending acknowledgement to other unit via mutual common service provider.

In view of the above it would be advantageous to provide an improved wireless connection of a portable device to a selected device in a group of nearby devices. In a particular aspect it would be advantageous to provide said improved wireless connection with a minimum of additional circuitry and signal processing in the portable device.

### SUMMARY OF THE INVENTION

The present invention is directed to solving the problem of providing an improved wireless connection of a portable device to a selected device in a group of nearby devices. According to a particular aspect of the present invention it would be advantageous to provide said improved wireless connection with a minimum of additional circuitry and signal processing in the portable device.

One object of the present invention is thus to provide an improved wireless connection of a portable device to a selected device in a group of nearby devices.

This object is achieved according to a first aspect of the present invention which provides a method for a wireless connection of a wireless portable device to a selected wireless device in a group of nearby wireless devices each provided with a light emitting arrangement suitable to emit light comprising useful connection-information, said portable device is provided with a short range control and a short-range-unit for a wireless communication with said group of nearby wireless devices, a substantially omnidirectional antenna connected to said short-range-unit for a substantially omnidirectional communication, and at least one directional communication device in the form of a camera arrangement (24) for a substantially directional communication by recording information received by means of light, said directional communication device is connected to said short-range-unit for a substantially directional communication.

The method performed by the short-range-control (40) and the short-range-unit (50) comprises the steps of:
- activating the directional communication device,
- selecting a nearby wireless device by directing the directional communication device towards a nearby wireless device,
- receiving the light comprising connection information from the selected wireless device (10a),
- connecting the portable device to the selected device trough the use of said connection information,
- communicating with the selected device via said substantially omnidirectional antenna after said connecting.

A second aspect of the invention is directed towards a method including the features of the first aspect, characterised by using the camera for directional communication by recording an image of the selected device, which image is utilized by the portable device to identify the selected device.

A third aspect of the invention is directed towards a method including the features of the second aspect, characterised by the steps of extracting any useful connection-information from possible markings in the recorded image.

A fourth aspect of the invention is directed towards a method including the features of the first aspect, **characterised in that** the directional communication-device is activated upon the occurrence of at least one of: the user pushing a button on a key pad of the portable device; the detection of several near by devices; the activation of a software application.

The object mentioned above is also achieved according to a fifth aspect of the present invention directed towards a wireless portable device arranged to be operatively connected to a selected wireless device in a group of nearby wireless devices each provided with a light emitting arrangement suitable to emit light comprising useful connection-information, said portable device comprises a short-range-control and a short-range-unit for a wireless communication with said group of nearby wireless devices, and a substantially omnidirectional antenna connected to said short-range-unit for a substantially omnidirectional communication with said nearby wireless devices. The portable device is further comprising: at least one substantially directional communication device in the form of a camera arrangement for a directional communication by recording information received by means of light, said directional device is connected to said short-range-unit and arranged to be operatively directed towards a nearby wireless device thus selected. Wherein the short-range-control and the short-range-unit are arranged to operatively activate the directional communication device to receive the light comprising connection information from the selected wireless device; connect the portable device to the selected device trough the use of said connection information, and communicate with the selected device via said substantially omnidirectional antenna after said connecting

A sixth aspect of the invention is directed towards a portable device including the features of the fifth aspect, **characterised in that** the camera is arranged for directional communication by recording an image of the selected wireless device, and in that the portable device is arranged to utilize the image to identify the selected device.

A seventh aspect of the invention is directed towards a portable device including the features of the sixth aspect **characterised in that** the short-range unit is arranged for operatively extract any useful connection-information from possible markings in the recorded image.

An eight aspect of the invention is directed towards a portable device including the features of the fifth aspect, **characterised in that** the directional communication-device is activated upon the occurrence of at least one of: the user pushing a button on a key pad of the portable device; the detection of several near by devices; the activation of a software application.

A ninth aspect of the invention is directed towards a computer program element having a program recorded thereon, where the program is to make a portable device to execute, when said program means is loaded in the portable device comprising:
- a short-range-control and a short-range-unit for a wireless communication with said group of nearby devices,
- a substantially omnidirectional antenna connected to said short-range-unit for a substantially omnidirectional communication, and
- at least one directional communication device for a substantially directional communication, the steps of:

- activating the directional communication device,
- receiving the light comprising connection information from the selected wireless device,
- connecting the portable device to a selected device trough the use of said connection information,
- communicating with the selected device via said substantially omnidirectional antenna after said connecting.

Further advantages of the present invention and embodiments thereof will appear from the following detailed description of the invention.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
- Fig. 1: shows a schematic view of an exemplifying portable communication device in the form of a WiFi enabled cell phone.
- Fig. 2: shows the cell phone in Fig. 1 connected to a cellular network.
- Fig. 3: shows a schematic block diagram of the relevant parts of the cell phone in Fig. 1-2.
- Fig. 4a: shows a first schematic set-up comprising the cell phone in Fig. 1-3 and three other WiFi enabled devices.
- Fig. 4b: shows a second schematic set-up comprising the cell phone in Fig. 1-3 and three other WiFi enabled devices.
- Fig. 5: shows a flow chart for performing the method according to an embodiment of the present invention.
- Fig. 6: shows a CD ROM on which program code for executing the method according to the invention is provided.

### DETAILED DESCRIPTION OF EMBODIMENTS

The present invention relates to portable communication devices. Embodiments of the invention relate to wireless communication devices and particular embodiments relate to communication devices comprising an imaging system. On the whole, the invention can be applied to any suitable portable communication device.

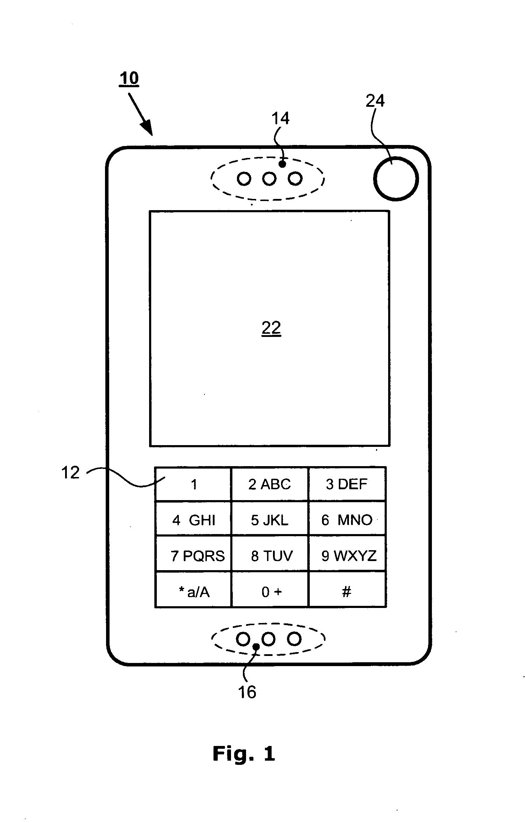

A portable communication device according to a preferred embodiment of the present invention is shown in Fig. 1. The device is preferably a mobile cell phone 10 adapted to operate according to 3G-technology (e.g. W-CDMA or CDMA2000) or possibly according to 2,5-technology (e.g. GPRS) or similar technology. Information about 3G-technology and 2,5-technology etc. can e.g. be found in specifications from the 3^{rd} Generation Partnership Project (3GPP), see e.g. the web-site at www.3qpp.orq.

The cellular phone 10 shown in Fig. 1 is provided with a keypad 12, a loudspeaker 14 and a microphone 16. The keypad 12 is used for entering information such as selection of functions and responding to prompts. The keypad 12 may be of any suitable kind, including but not limited to keypads with push-buttons as well as touch-buttons and/or a combination of different suitable button arrangements. The loudspeaker 14 is used for presenting sounds to the user and the microphone 16 is used for sensing the voice from the user. In addition, the cell phone 10 includes an antenna to be used for communication with other users via a network. However the antenna is in-built in the phone 10 and hence not shown in Fig 1. In addition, the cell phone 10 comprises a display 22 for displaying functions and prompts to a user of the phone 10.

Moreover, the cell phone 10 comprises a camera arrangement 24 for enabling images to be digitally recorded by the phone 10. It is preferred that the camera arrangement 24 comprises a lens and/or a lens system and a image sensor such as an CCD (Charged Couple Device) comprising an integrated circuit with an array of linked, or coupled, capacitors sensitive to the light. Naturally, other image sensors are conceivable, e.g. an APS (Active Pixel Sensor) comprising an integrated circuit with an array of pixels, each containing a photo detector as well as three or more transistors. The display 22 may be utilized for presenting images recorded by the camera arrangement 24.

Before we proceed it should be emphasised that the cell phone 10 in Fig. 1 is just one example of a portable device in which the invention can be implemented. The invention can for instance also be used in a PDA (personal digital assistant), a palm top computer, a lap top computer or a smartphone or any other suitable portable device, e.g. such as a digital camera.

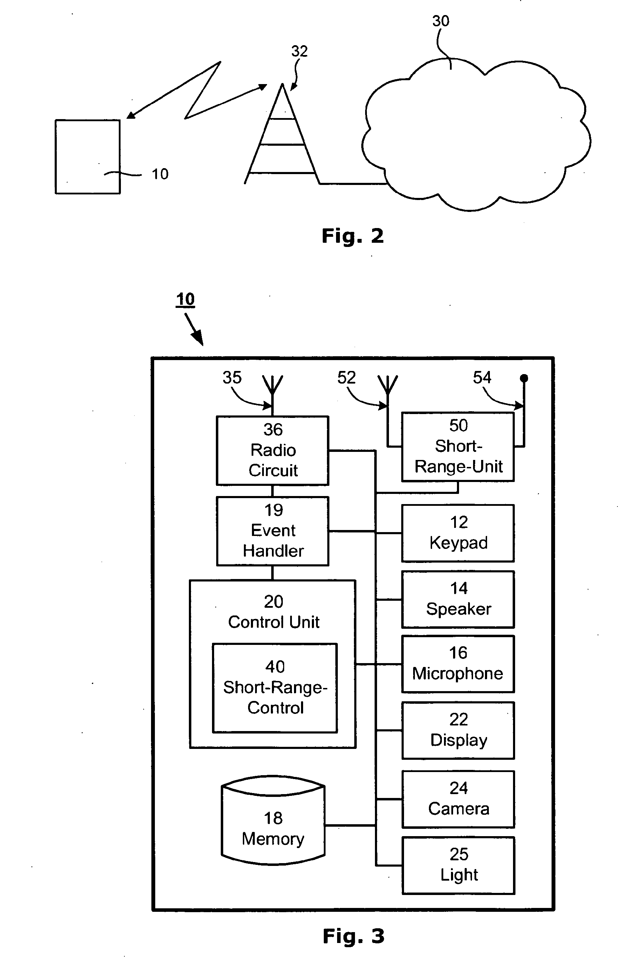

Fig. 2 shows the cell phone 10 connected to a cellular network 30 via a base station 32. The network 30 is typically a GSM or a GPRS network, or any other 2G, 2,5G or 2,75G network. It is of course also possible that the network is a 3G network such as a WCDMA network. However, the network does not have to be a cellular network but can be some type of network, such as Internet, a corporate intranet, a LAN or a wireless LAN.
Fig. 3 shows parts of the interior of the cell phone 10 being relevant for the present invention. As previously explained, it is preferred that the cell phone 10 comprises a keypad 12, a speaker 14, a microphone 16, a display 22 and a camera arrangement 24. It is also preferred that the phone 10 is provided with a memory 18 for storing data files, in particularly image files produced by the camera arrangement 24. The memory 18 may be any suitable memory type that is typically used in portable devices.

In addition, the cell phone 10 comprises an antenna 34 connected to a radio circuit 36 for enabling radio communication with the network 30 in Fig. 2. The radio circuit 36 is in turn connected to an event handling unit 19 for handling such events as outgoing and incoming communication to and from external units via the network 30, e.g. calls and messages, e.g. SMS (Short Message Service) and MMS (Multimedia Messaging Service).

Of particular interest in connection with the embodiment now described is the short-range-unit 50 shown in Fig. 3. The short-range-unit 50 is preferably a so-called WiFi transceiver. As explained above the WiFi is a brand that was originally licensed by the WiFi Alliance to describe the underlying technology of WLAN:s based on the IEEE 802.11 specifications or similar. A person with a WiFi enabled device such as a cell phone or a PDA or similar can e.g. connect to the Internet when in proximity of an access point. The space covered by one or several access points is called a hotspot. WiFi also allows connectivity in peer-to-peer mode, which enables devices to connect directly with each other. This connectivity mode is useful e.g. in consumer electronics and gaming applications.

As schematically illustrated in Fig. 3 the short-range-unit 50 is preferably connected to a first substantially omnidirectional antenna 52 for a substantially omnidirectional communication with other WiFi devices or similar in the near vicinity of the cell phone 10. In addition, as is likewise schematically illustrated in Fig. 3, the short-range-unit 50 is preferably connected to a second substantially directional antenna 54 for a substantially directional communication with other WiFi devices similar in the near vicinity of the cell phone 10.

In particular, the short-range-unit 50 is arranged to operatively switch between the substantially omnidirectional antenna 52 and the substantially directional antenna 54. To this end the short-range-unit 50 may comprise a switch (not shown) or similar means for selecting one of the two antennas 52, 54 when communicating with other WiFi devices. The switch may e.g. be implemented by means a diode and/or transistor arrangement or similar as is well known by those skilled in the art.

It should be added that the directional and omnidirectional properties of the antenna arrangement, comprising the directional antenna 54 and the omnidirectional antenna 52, can be accomplished by means of a range of suitable directional antenna arrangements. For example, the antenna arrangement may alternatively comprise a group-antenna or similar, e.g. an electrically controlled phased array antenna, being arranged to produce a variable antenna lobe, i.e. a wide or possibly omnidirectional lobe and a narrow directional lobe.To this end the short-range-unit 50 can be provided with a lobe-control-arrangement for controlling the lobe-shape of the group antenna or similar. Typically, such lobe-control-arrangements adjust the relative phase shift ϕ between successive antenna elements in the group antenna, as is well known by those skilled in the art.

As can be seen in Fig. 3 the cell phone 10 is also provided with a control unit 20 for controlling and supervising the operation of the phone 10. The control unit 20 may be implemented by means of hardware and/or software, and it may comprise one or several hardware units and/or software modules, e.g. one or several processor units provided with or having access to the appropriate software and hardware necessary for the functions required by the phone 10, as is well known by those skilled in the art.

It is preferred that the control unit 20 is connected to the keypad 12, the speaker 14, the microphone 16, the memory 18, the event handling unit 19, the display 22, the camera 24, the radio unit 36 and the short-range-unit 50. This enables the control unit 20 to control and communicate with these units so as to e.g. exchange information and instructions with the units.

Of particular interest in connection with the present invention is the short-range-control 40 comprised by the control unit 20. Being a part of the control unit 20 implies that the short-range-control 40 can be implemented by means of hardware and/or software and it can comprise one or several hardware units and/or software modules, e.g. one or several processor units provided with or having access to the software and hardware appropriate for the functions required. The short-range-control 40 is preferably arranged to operatively process the signals that is transmitted and/or received by the short-range-unit 50, e.g. arranged to process signals in connection with a WLAN communication performed by means of the short-range-unit 50. Transmission by means of WLAN communication and the control thereof is well known by those skilled in the art and the function is a common feature in a wide range of well known portable devices, see e.g. the Sony-Ericsson 3G-smartphone P990i. In addition, the short-range-control 40 is arranged to operatively control the antenna lobe created by the antenna arrangement connected to the short-range-unit 50. In case the antenna arrangement comprises a first omnidirectional antenna 52 and a second directional antenna 54 the antenna lobe can be controlled by e.g. switching between the two antennas. To this end there is preferably a switch arranged in the short-range-unit 50 to be operatively controlled by the short-range-control 40, e.g. by means of instructions sent to the short-range-unit 50. In case the antenna arrangement is a group-antenna (e.g. a phased array antenna) or a similar antenna arrangement providing a variable antenna lobe it is preferred that a lobe-control-arrangement is arranged in the short-range-unit 50 to be operatively controlled by the short-range-control 40, e.g. by means of instructions sent to the short-range-unit 50. Such instructions may e.g. comprise the relative phase shift ϕ to be used between successive antenna elements in the group antenna.

Before we proceed it should be emphasised that in addition to the parts and units of the cell phone shown in Fig. 3 there may be further parts and units or similar present in the cell phone 10. The parts and units shown in Fig. 3 may also be connected to more parts and units than illustrated.

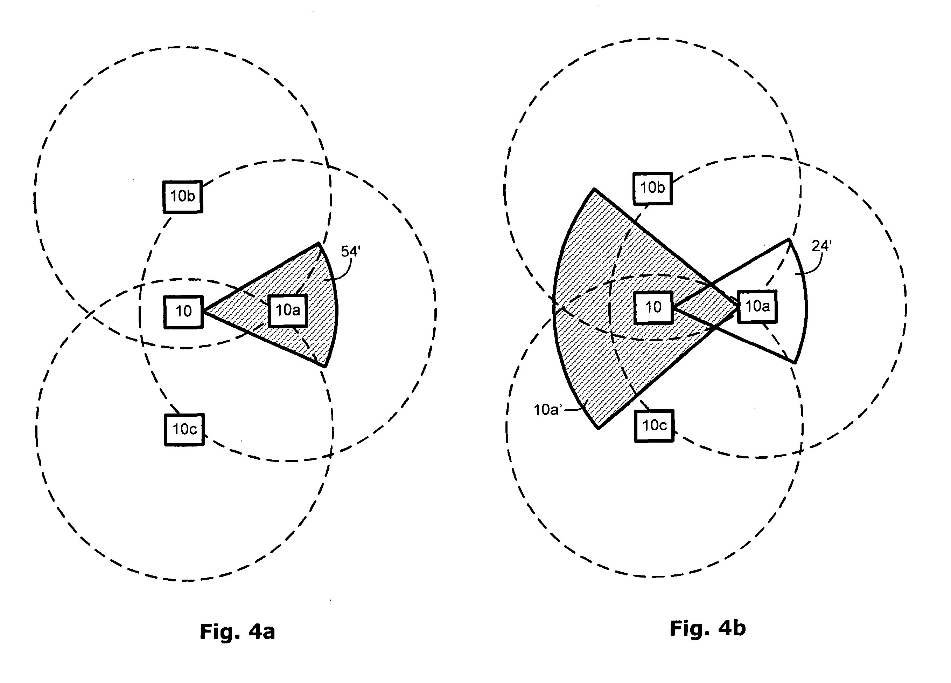

The attentions is now directed to Fig. 4a which shows a first exemplifying set-up of four WiFi enabled devices, i.e. the cell phone 10 as described above and three peers 10a, 10b and 10c. The WiFi devices 10a-10c in Fig. 4a may e.g. be a WiFi enabled computer, CD-player, DVD-player, TV-set, camera, phone, PDA or any other WiFi enabled media device or similar, e.g. a mass-storage. The devices 10a-10c are typically arranged in the same room or in the same building or in a similar narrow space so that the beacon transmission or similar from at least two and typically all of the devices 10a-10c can be detected simultaneously by the cell phone 10 in at least one location. The technique for detecting one or several WiFi devices and similar is well known by those skilled in the art and it is frequently used in commercially available products such as cell phones and laptops, see e.g. the Sony-Ericsson 3G-smartphone P990i. The transmission ranges of the WiFi devices 10a-10c have been schematically illustrated in Fig. 4a by means of dashed circles. As can be seen the transmission ranges are illustrated with rather small circles and it should be understood that the ranges may be more extended. In fact, the transmission ranges may be as large compared to the distance between the devices 10a-10c so that the space covered by the devices 10a-10c can be regarded as substantially identical. When a WiFi enabled cell phone 10 provided with an omnidirectional antenna 52 enters such a space it will be able to potentially connect to each device 10a-10c from which it receives a beacon transmission or similar, *i.e.* in many cases it will be able to connect to all the devices 10a-10c.

To enable a fast, simple and intuitive selection of the device 10a-10c to which the cell phone 10 is to be connected it is preferred that the omnidirectional antenna 52 is switched off, while the directional antenna 54 is switched on to form a rather narrow antenna lobe 54'. The antenna lobe 54' may e.g. be in the interval of substantially 20° - 40° and more preferably in the interval of substantially 10° - 30° and most preferably in the interval of substantially 15° - 25°. The narrow lobe 54' has been schematically indicated in Fig. 4a by a shadowed sector of a circle. A switch from the omnidirectional antenna 52 to the directional antenna 54 can e.g. be achieved by the user pushing a button on the keypad 22, which is detected by the control unit 20 and the short-range-control 40 sending instructions to the short-range-unit 50 to switch from the omnidirectional antenna 52 to the directional antenna 54. Alternatively the omnidirectional antenna 52 may be switched off and the directional antenna 54 switched on as soon as the cell phone 10 detects more than one WiFi enabled device in range of the omnidirectional antenna 52.

In addition when the transmission is switched from the omnidirectional antenna 52 to the directional antenna 54 it is preferred that the transmission power is reduced by the short-range control 40 and/or the short-range unit 50. This is advantageous, since it reduces the transmission range and thus the risk that more than one nearby WiFi device receives the directional transmission so as to be able to communicate with the cell phone 10, i.e. the selection function will be improved in that the chances of selecting only one nearby WiFi device is increased.

Once the directional antenna 54 is activated the cell phone 10 will only be able to detect other WiFi devices that are within the lobe of the directional antenna 54. In other words, the cell phone will not detect a WiFi device that is located outside the lobe of the directional antenna 54. This is so even if a WiFi device is located very near the cell phone 10, at least if we assume an ideal antenna lobe.

However, in some embodiments of the invention it may be difficult to accomplish a directional antenna 54 with an antenna lobe 54' in the preferred angular intervals as discussed above. In addition, the directional antenna 54 may have side lobes causing unwanted sensitivity outside the main antenna lobe 54'. Consequently, even if the directional antenna 54 is activated and the centre of the directional antenna lobe 54' is directed towards a certain WiFi device the cell phone 10 may nevertheless detect several WiFi devices. However, the signal strength from a certain WiFi device near or at the centre of the directional antenna lobe 54' will be substantially unchanged or even stronger compared to the signal strength from the same device received by the omnidirectional antenna 52. As a contrast, other WiFi devices that are not near or at the centre of the directional antenna lobe 54' will diminish in signal strength. It should be added that in case the directional antenna 54 has a low gain the signal strength received from a certain WiFi device near or at the centre of the antenna lobe 54' of the directional antenna 54 may be lower than the signal strength received from the same device by the omnidirectional antenna 52. However, compared to the signal strengths received by the omnidirectional antenna 52 the ratio of the decrease in signal strength for the WiFi device near or at the centre of the antenna lobe 54' will be less than the ratio of the decrease in signal strength for other WiFi devices that are not near the centre of the directional antenna lobe 54'.

Hence, with reference to Fig. 4a, a WiFi device 10a can be more accurately singled out in some embodiments of the invention if the omnidirectional antenna 52 is activated for a first measuring of the signal strengths from the nearby WiFi devices 10a-10c, whereby the directional antenna 54 is activated for a second measuring of the signal strength from at least one nearby WiFi device when the directional antenna 54 is directed towards a certain nearby WiFi device 10a. The cell phone 10 can then be connected to the nearby WiFi device 10a that has substantially the same signal strength in the first and second measuring, or has higher signal strength in the second measuring. Alternatively, in case of a directional antenna with low gain, the cell phone 10 can be connected to the nearby WiFi device 10a that displays the lowest ratio of decrease in signal strength from the first to second measuring.

It should be added that the received signal strength for a WiFi device is typically comprised by the Received Signal Strength Indication (RSSI) value for the transmitting device. It is therefore preferred that the cell phone 10 is arranged to measure the above signal strengths by monitoring the RSSI value for the nearby WiFi devices 10a-10c.

As described above, the activation of a directional antenna 54 enables a user of the cell phone 10 to select a WiFi device to which the cell phone 10 shall be connected by simply direct the cell phone 10 and the antenna lobe 54' towards the selected WiFi device. This is illustrated in Fig. 4a by a schematic antenna lobe 54' emanating from the directional antenna 54 of the cell phone 10 being directed to the WiFi device 10a. As can be seen in Fig. 4a the device 10a is now the only WiFi device in range of the cell phone 10 and the cell phone 10 can be unambiguously and safely connected to the WiFi device 10a.

The detection of a single WiFi device can e.g. be indicated on the display 22 and/or by a particular sound from the loudspeaker 14 of the cell phone 10. A connection to the single WiFi device can e.g. be achieved by the user pushing a button on the keypad 22, which is detected by the control unit 20 and the short-range-control 40 being arranged to operatively connect the cell phone 10 to the single WiFi device by means of the short-range-unit 50. Alternatively a connection to the single WiFi device can be performed by the control unit 20 etc as soon as the cell phone 10 detects a single WiFi device in range of the directional antenna 54.

Once a connection to the selected WiFi device has been accomplished it is preferred that the directional antenna 54 is switched off while the omnidirectional antenna 52 is switched on for ease of maintaining the connection as the cell phone 10 and possibly also the selected WiFi device may move.

An alternative embodiment of the present invention is schematically illustrated in Fig. 4b, which shows a second exemplifying set-up of four WiFi enabled devices, *i.e.* the cell phone 10 as described above and three peers 10a, 10b and 10c. The embodiment is characterized in that the directional antenna 54 of the cell phone 10 has been replaced by a directional light sensor. Here it is preferred that the camera arrangement 24 is utilized as a directional light sensor. This solution is particularly advantageous, since it utilizes existing hardware (the camera), i.e. the solution does not require additional hardware. The angle at which the camera 24 records light is preferably adjusted so as to be the same or similar as the angle of the antenna lobe 54' discussed above. This may e.g. be achieved by means of an autofocus arrangement for increasing or decreasing the recording angle as is well known by those skilled in the art. In this way a light-sensing-lobe 24' can be created by the camera 24 as is schematically illustrated in Fig. 4b. An activation of the camera 24 as light sensor can e.g. be achieved by the user pushing a button on the keypad 22. This is detected by the control unit 20 which in turn activates the camera 24. Alternatively the camera 24 may be activated as light sensor as soon as the cell phone 10 detects more than one WiFi enabled device in range of the omnidirectional antenna 52.

From the above the observant reader realizes that the embodiment now discussed presumes that the WiFi device to be selected is provided with a light emitting arrangement suitable to emit light that can be detected by the camera 24, *i.e.* the light sensing means of the camera 24. To this end a light-lobe 10a' emanating from the WiFi device 10a has been schematically indicated in Fig. 4b by a shadowed sector of a circle. The scattering angle of the light-lobe 10a' may be the same or similar as the angle of the directional antenna lobe 54' discussed above. However a larger angle is clearly conceivable. The light may be modulated and/or encoded and it follows that the cell phone 24 should be able to demodulate/decode the modulated/encoded light in such cases. In any case it is preferred that the light from the WiFi device 10a comprises useful connection-information so as to facilitate the connection of other WiFi devices such as the cell phone 10. The connection-information may e.g. comprise the name of the network (e.g. the Service Set Identifier, SSID) or similar to which the WiFi device belongs and possibly the identity or similar of the WiFi device in question. The light emitted by the WiFi device 10a may also comprise such useful connection-information as which frequency band the device is operating on, which channel in that band, if the connection is open or private, the tariffs to be used, etc. Though it is not a prerequisite for the invention it is preferred that the light emitted by the WiFi device is invisible to the human eye (e.g. infrared light or similar) so as to avoid disturbing the user and other persons. Here it should be noted that silicon light sensors such as CCD:s used in digital cameras are typically sensitive to infrared light.

Once the light sensing camera 24 of the cell phone 10 has been activated this enables a user of the cell phone 10 to select a WiFi device to be connected to the cell phone 10 by simply direct the cell phone 10 and the camera 24 towards the WiFi device in question, e.g. the WiFi device 10a as illustrated in Fig. 4b. When the cell phone 10 receives the light from the WiFi device 10a it is preferred that the cell phone 10 obtains the connection-information comprised by the light, e.g. the name of the network or similar to which the WiFi device 10a belongs and possibly the identity or similar of the WiFi device 10a. The connection-information is then utilized by the cell phone 10 for establishing a connection with the WiFi device pointed out by the cell phone 10 and the camera 24.

As a further feature a connection to a WiFi device is only performed when the cell phone 10 detects light from a single WiFi device, *i.e.* no connection is attempted when the cell phone 10 detects illumination from two WiFi devices or more. The light from the different WiFi devices may e.g. comprise different carrier frequencies so as to enable the cell phone 10 to detect the light from two or more WiFi devices by analysing the frequency contents of the received light.

Once a connection to the selected WiFi device has been accomplished it is preferred that the light sensing camera 24 is switched off while the omnidirectional antenna 52 is switched on for ease of maintaining the connection as the cell phone 10 and possibly also the selected WiFi device may move.

It is preferred that the alternative light-based embodiment described above maintains the omnidirectional antenna 52 active during the connection procedure, i.e. there is preferably no switching or similar between a directional antenna and an omnidirectional antenna as in the previously described embodiment. However, the embodiments now described may be combined for an improved reliability (and security) in the connection process.

Another alternative embodiment of the present invention utilizes the content of an image recorded by the camera arrangement 24 of the cell phone 10. The content of the recorded image is preferably analysed so as to identify possibly nearby WiFi devices captured in the image. This can be achieved with varying accuracy by means of substantially any suitable well known image recognition technique, which e.g. can compare the currently recorded image or a representation thereof with pre-stored reference images of various WiFi devices 10a-10c or representations thereof. Well known example are the Bayesian Maximum a posteriori difference classifier (Bayesian MAP) or similar, or the Bayesian Maximum Likelihood classifier (Bayesian MP) or similar. Reference images or representations thereof may be recorded and/or obtained and stored in the cell phone 10 at an earlier occasion. In particular, the camera arrangement 24 of the cell phone 10 can be utilize to record such reference images of the WiFi devices 10a-10c that are intended to be connected to the cell phone 10. The images and/or representations thereof can then be stored in the cell phone 10 together with information about the WiFi device captured by the image in question, *e.g.* stored together with connection-information such as the name of the network (e.g. the Service Set Identifier, SSID) or similar, the identity or similar of the WiFi device in question, the frequency band the WiFi device is supposed to operate on, which channel in that band, if the connection is open or private, the tariffs to be used, etc. The connection-information and similar can e.g. be entered by the user utilizing the keys on the keypad 12 of the cell phone 10. In case a WiFi device is actually identified in the currently recorded image - e.g. the WiFi device 10a as shown in Fig. 4b - it will be possible to connect the cell phone 10 to the identified device 10a by utilizing information about the identified device 10a that have been previously stored in the cell phone 10 together with the image of the identified device 10a.

Before we proceed it should be added that WiFi devices 10a-10c to which the cell phone 10 is to be connected are preferably provided with visible information tags or similar markings comprising useful connection-information so as to facilitate the connection of the WiFi devices 10a-10c to the cell phone 10. The markings may e.g. comprise a two dimensional bar-cod or some other pattern comprising a representation of e.g. the name of the network (e.g. the Service Set Identifier, SSID) or similar to which the WiFi device in question belongs and/or the identity or similar of the WiFi device in question etc. In these cases the image recorded by the camera arrangement 24 may comprise such markings. Hence, it is preferred that the short-range control 40 of the cell phone 10 is arranged to operatively extract any useful connection-information from possible markings in the recorded image so as to facilitate the connection of other WiFi devices such as the cell phone 10. For example, if the pattern is a two dimensional bar-code this can be done by simply extract the information comprised by the bar-code in a well known manner (c.f. e.g. ordinary checkout counters in ordinary stores).

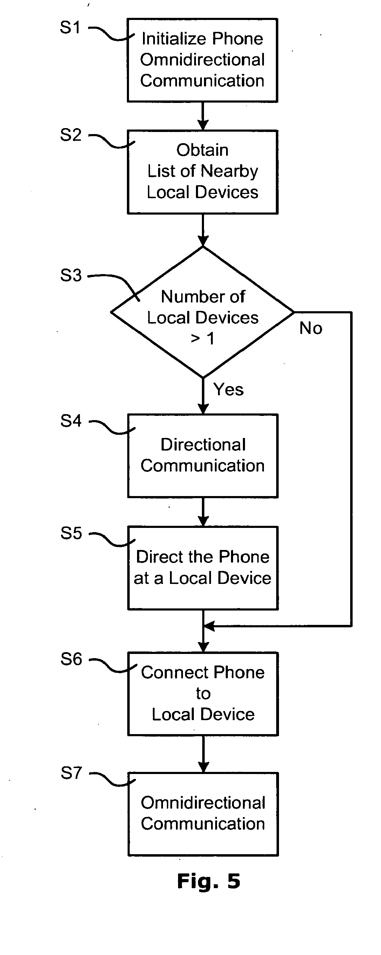

The attention is now directed towards the function of an exemplifying embodiment of the present invention, which will be described with reference to Fig. 1-3 together with Fig. 4a-4c illustrating two exemplifying set-ups of WiFi devices, and Fig. 5 showing a flow chart of a preferred method according an embodiment to the invention.

As previously explained, an exemplifying portable device in the form of cellular phone 10 according to an embodiment of the invention is provided with a short-range-unit 50 arranged to operatively establish a wireless WiFi communication with a nearby WiFi device. In addition, the cell phone 10 is provided with a substantially omnidirectional antenna 52 connected to said short-range-unit 50 for enabling a substantially omnidirectional communication with said near by WiFi device. The cell phone 10 comprises at least one directional communication-device 54, 24 being arranged to operatively communicate connection-information with said nearby WiFi device when the directional communication-device 54, 24 is directed towards said nearby WiFi device.

The steps in an exemplifying method for establishing a wireless communication between the cell phone 10 and a nearby WiFi device will now be described with reference to the exemplifying flow chart in Fig. 5. The method is preferably performed by means of the short-range-control 40 and the short-range-unit 50.

In a first step S1 of an exemplifying method according to an embodiment of the present invention the connecting function is initialised by the short-range-control 40 controlling the short-range-unit 50. The initialisation includes such actions as activating the cell phone 10 to search for nearby WiFi devices 10a-10c by means of the omnidirectional antenna 52. The search is preferably performed, as is well known by those skilled in the art, by listening for beacon transmissions or similar from possible WiFi device 10a-10c in the near vicinity of the cell phone 10.

In a second step S2 of the exemplifying method a list or similar is prepared comprising the nearby WiFi devices 10a-10c from which the cell phone 10 has received a beacon transmission or similar. The list may e.g. comprise the names of the networks or similar to which a certain WiFi device 10a-10c belongs and possibly the identity or similar of the WiFi device in question. The name of the network and possibly other such facts are typically comprised by the beacon transmission received from the WiFi device. The prepared list may be presented on the display 22 of the portable communication device (e.g. the cell phone 10) as is well known. However, a presentation is not required by the present invention.

In a third step S3 it is investigated whether the above mentioned list comprises more than one WiFi device, *i.e.* whether the cell phone 10 has received a beacon transmission or similar from more than one WiFi device. If the list comprises a single WiFi device it is preferred that the cell phone 10 establishes a connection with that device as indicated in Fig. 5 by the line extending from the parallelogram-shaped box S3 to the square-shaped box S6.

In a fourth step S4 it is preferred that the user of the cell phone 10 activates a directional communication channel. As described above, this can include activating a directional antenna 54 or a directional light sensor 24. However, the invention is not limited to communication by means of directional electromagnetic radiation in general and directional light in particular. Other means such as e.g. directional ultra-sound or similar may be utilised in some embodiments. An activation of the directional function can e.g. be achieved by the user pushing a button on the keypad 22, which is detected by the control unit 20 as described above. An activation of the directional function can also be performed when a certain software application is activated, e.g. when the user selects a photo or some other multimedia item or amusement item to be transferred to another nearby WiFi device. The selection can e.g. be achieved by the user pushing a button on the key pad 22. Alternatively an activation of directional function can be performed as soon as the cell phone 10 detects a plurality of WiFi devices in range of the directional antenna 54.

In a fifth step S5 it is preferred that the user of the cell phone 10 selects a WiFi device to be connected to by directing the cell phone 10 at said WiFi device as described above with reference to Fig. 4a-4b.

In a sixth step S6 it is preferred that the cell phone 10 is connected to the selected WiFi device 10a. To this end it is preferred that the selected WiFi device communicates connection-information so as to facilitate a connection of the selected WiFi device to the cell phone 10. As previously described, the connection-information may e.g. comprise the name of the network or similar to which the WiFi device belongs and possibly the identity or similar of the WiFi device in question. The communicated connection-information enables the cell phone 10 to connect to the selected WiFi device, e.g. by connecting to the network and/or device comprised by the connecting-information, or by connecting to the only WiFi device that is responding to the connecting attempts performed by the cell phone 10. It should be emphasized that the connection-information may simply be the light emitted by a light source arranged on the WiFi device as in one embodiment described above with reference to Fig. 4b.

In a seventh step S7 it is preferred that the cell phone 10 continues the communication with the selected WiFi device by means of the omnidirectional antenna once a connection has been established with the selected WiFi device by means of the directional communication channel.

It must be emphasized that the method described above is merely an example of the present invention. Other embodiments of the method may comprise more steps or fewer steps and the steps may be executed in another order that the one given above.

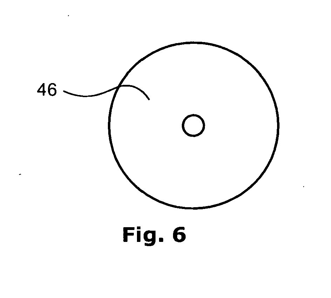

In general, as previously explained, it is preferred that the short-range-control 40, arranged to perform the exemplifying method described above, is provided in the form of one or more processors with corresponding memory containing the appropriate software in the form of a program code. However, the program code can also be provided on a data carrier such as a CD ROM disc 46 as depicted in Fig. 6 or an insertable memory stick, which will perform the invention when loaded into a computer or into a phone having suitable processing capabilities. The program code can also be downloaded remotely from a server either outside or inside the cellular network or be downloaded via a computer like a PC to which the phone is temporarily connected.

The present invention has now been described with reference to exemplifying embodiments. However, the invention is not limited to the embodiments described herein. On the contrary, the full extent of the invention is only determined by the scope of the appended claims.

## Claims

1. A method for a wireless connection of a wireless portable device (10) to a selected wireless device (10a) in a group of nearby wireless devices (10a, 10b, 10c) each provided with a light emitting arrangement suitable to emit light comprising useful connection-information, said portable device (10) is provided with a short-range-control (40) and a short-range-unit (50) for a wireless communication with said group of nearby wireless devices (10a, 10b, 10c), a substantially omnidirectional antenna (52) connected to said short-range-unit (50) for a substantially omnidirectional communication, and at least one directional communication device in the form of a camera arrangement (24) for a substantially directional communication by recording information received by means of light, said directional communication device (24) is connected to said short-range-unit (50), which method performed by the short-range-control (40) and the short-range-unit (50) comprises the steps of:
- activating the directional communication device (24),
- selecting a nearby wireless device by directing the directional communication device (24) towards said nearby wireless device (10a),
- receiving the light comprising connection information from the selected wireless device (10a),
- connecting the portable device (10) to the selected device (10a) trough the use of said connection information,
- communicating with the selected device (10a) via said substantially omnidirectional antenna (52) after said connecting.

2. The method in claim 1, **characterised by** steps of using the camera (24) for directional communication by recording an image of the selected device (10a), which image is utilized by the portable device (10) to identify the selected device (10a).

3. The method in claim 2, **characterised by** steps of extracting any useful connection-information from possible markings in the recorded image.

4. The method in claim 1, **characterised by** the steps of activating the directional communication-device upon the occurrence of at least one of: the user pushing a button on a key pad (22) of the portable device (10); the detection of several near by devices (10a, 10b, 10c); the activation of a software application.

5. A wireless portable device (10) arranged to be operatively connected to a selected wireless device (10a) in a group of nearby wireless devices (10a, 10b, 10c) each provided with a light emitting arrangement suitable to emit light comprising useful connection-information, said portable device (10) comprises a short-range-control (40) and a short-range-unit (50) for a wireless communication with said group of nearby wireless devices (10a, 10b, 10c), and a substantially omnidirectional antenna (52) connected to said short-range-unit (50) for a substantially omnidirectional communication with said nearby wireless devices (10a, 10b, 10c), and further comprising
at least one substantially directional communication device in the form of a camera arrangement (24) for a directional communication by recording information received by means of light, said directional communication device (24) is connected to said short-range-unit (50) and arranged to be operatively directed towards a nearby wireless device (10a) thus selected, and
wherein the short-range-control (40) and the short-range-unit (50) are arranged to operatively:
- activate the directional communication device (24) to receive the light comprising connection information from the selected wireless device (10a),
- connect the portable device (10) to the selected device (10a) trough the use of said connection information, and
- communicate with the selected device (10a) via said substantially omnidirectional antenna (52) after said connecting.

6. The portable device (10) in claim 5, **characterised in that** the camera (24) is arranged for directional communication by recording an image of the selected wireless device (10a), and **in that** the portable device (10) is arranged to utilize the image to identify the selected device (10a).

7. The portable device (10) in claim 5, **characterised in that** the short-range unit (40) is arranged to operatively extract any useful connection-information from possible markings in the recorded image.

8. The portable device (10) in claim 5, **characterised in that** the directional communication-device is arranged to be activated upon the occurrence of at least one of: the user pushing a button on a key pad (22) of the portable device (10); the detection of several near by devices (10a, 10b, 10c); the activation of a software application.

9. A computer program product stored on a computer usable medium, comprising readable program means for causing a portable device (10) to execute, when said program means is loaded in a portable device (10) comprising:
- a short-range-control (40) and a short-range-unit (50) for a wireless communication with a group of nearby devices (10a, 10b, 10c) each provided with a light emitting arrangement suitable to emit light comprising useful connection-information,
- a substantially omnidirectional antenna (52) connected to said short-range-unit (50) for a substantially omnidirectional communication, and
- at least one directional communication device in the form of a camera arrangement (24) for a substantially directional communication by recording information received by means of light, said directional communication device (24) is connected to said short-range-unit (50),
the steps of:
- activating the directional communication device (24),
- receiving the light comprising connection information from the selected wireless device (10a),
- connecting the portable device (10) to a selected device (10a) trough the use of said connection information,
- communicating with the selected device (10a) via said substantially omnidirectional antenna (52) after said connecting.

## Patentansprüche

1. Verfahren für eine drahtlose Verbindung einer drahtlosen tragbaren Vorrichtung (10) mit einer ausgewählten drahtlosen Vorrichtung (10a) aus einer Gruppe von nahegelegenen drahtlosen Vorrichtungen (10a, 10b, 10c), welche jeweils mit einer lichtaussendenden Anordnung versehen sind, welche in der Lage ist, Licht auszusenden, welches eine verwendbare Verbindungsinformation umfasst, wobei die tragbare Vorrichtung (10) mit einer Kurzbereichssteuerung (40) und einer Kurzbereichseinheit (50) für eine drahtlose Kommunikation mit der Gruppe von nahegelegenen drahtlosen Vorrichtungen (10a, 10b, 10c), einer Antenne (52) mit im Wesentlichen kugelförmiger Richtcharakteristik, welche mit der Kurzbereichseinheit (50) für eine Kommunikation mit im Wesentlichen kugelförmiger Richtcharakteristik verbunden ist, und mindestens einer gerichteten Kommunikationsvorrichtung in Form einer Kameraanordnung (24) für eine im Wesentlichen gerichtete Kommunikation durch Aufzeichnen von Information, welche mittels Licht empfangen wird, versehen ist, wobei die gerichtete Kommunikationsvorrichtung (24) mit der Kurzbereichseinheit (50) verbunden ist, wobei das Verfahren, welches von der Kurzbereichssteuerung (40) und der Kurzbereichseinheit (50) ausgeführt wird, die Schritte umfasst:
- Aktivieren der gerichteten Kommunikationsvorrichtung (24),
- Auswählen einer nahegelegenen drahtlosen Vorrichtung durch Richten der gerichteten Kommunikationsvorrichtung (24) in Richtung der nahegelegenen drahtlosen Vorrichtung (10a),
- Empfangen des Lichtes, welches eine Verbindungsinformation umfasst, von der ausgewählten drahtlosen Vorrichtung (10a),
- Verbinden der tragbaren Vorrichtung (10) mit der ausgewählten Vorrichtung (10a) durch die Verwendung der Verbindungsinformation,
- Kommunizieren mit der ausgewählten Vorrichtung (10a) über die Antenne (52) mit im Wesentlichen kugelförmiger Richtcharakteristik nach dem Verbinden.

2. Verfahren nach Anspruch 1, **gekennzeichnet durch** den Schritt eines Verwendens der Kamera (24) für eine gerichtete Kommunikation **durch** Aufzeichnen eines Bildes der ausgewählten Vorrichtung (10a), wobei das Bild von der tragbaren Vorrichtung (10) verwendet wird, um die ausgewählte Vorrichtung (10a) zu identifizieren.

3. Verfahren nach Anspruch 2, **gekennzeichnet durch** den Schritt eines Extrahierens einer beliebigen verwendbaren Verbindungsinformation aus möglichen Markierungen in dem aufgezeichneten Bild.

4. Verfahren nach Anspruch 1, **gekennzeichnet durch** den Schritt eines Aktivierens der gerichteten Kommunikationsvorrichtung aufgrund des Auftretens von einem Drücken eines Knopfes auf einer Tastatur (22) der tragbaren Vorrichtung (10) **durch** den Benutzer; der Erfassung von etlichen nahegelegenen Vorrichtungen (10a, 10b, 10c); und/oder dem Aktivieren einer Software-Anwendung.

5. Drahtlose tragbare Vorrichtung (10), welche ausgestaltet ist, funktionsfähig mit einer ausgewählten drahtlosen Vorrichtung (10a) aus einer Gruppe von nahegelegenen drahtlosen Vorrichtungen (10a, 10b, 10c) verbunden zu werden, welche jeweils mit einer lichtaussendenden Anordnung versehen sind, welche in der Lage ist, Licht auszusenden, welches eine verwendbare Verbindungsinformation umfasst, wobei die tragbare Vorrichtung (10) eine Kurzbereichssteuerung (40) und eine Kurzbereichseinheit (50) für eine drahtlose Kommunikation mit der Gruppe von nahegelegenen drahtlosen Vorrichtungen (10a, 10b, 10c) und eine Antenne (52) mit im Wesentlichen kugelförmiger Richtcharakteristik, welche mit der Kurzbereichseinheit (50) für eine Kommunikation mit im Wesentlichen kugelförmiger Richtcharakteristik mit den nahegelegenen drahtlosen Vorrichtungen (10a, 10b, 10c) verbunden ist, umfasst, und ferner umfasst
mindestens eine im Wesentlichen gerichtete Kommunikationsvorrichtung in Form einer Kameraanordnung (24) für eine gerichtete Kommunikation durch Aufzeichnen von Information, welche mittels Licht empfangen wird, wobei die gerichtete Kommunikationsvorrichtung (24) mit der Kurzbereichseinheit (50) verbunden ist und ausgestaltet ist, funktionsfähig in Richtung einer nahegelegenen drahtlosen Vorrichtung (10a) gerichtet zu werden, welche somit ausgewählt wird, und
wobei die Kurzbereichssteuerung (40) und die Kurzbereichseinheit (50) ausgestaltet sind, dazu zu dienen:
- die gerichtete Kommunikationsvorrichtung (24) zu aktivieren, um das Licht zu empfangen, welches eine Verbindungsinformation von der ausgewählten drahtlosen Vorrichtung (10a) umfasst,
- die tragbare Vorrichtung (10) mit der ausgewählten Vorrichtung (10a) durch die Verwendung der Verbindungsinformation zu verbinden, und
- mit der ausgewählten Vorrichtung (10a) über die Antenne (52) mit im Wesentlichen kugelförmiger Richtcharakteristik nach dem Verbinden zu kommunizieren.

6. Tragbare Vorrichtung (10) nach Anspruch 5, **dadurch gekennzeichnet, dass** die Kamera (24) für eine gerichtete Kommunikation durch Aufzeichnen eines Bildes der ausgewählten drahtlosen Vorrichtung (10a) ausgestaltet ist, und dass die tragbare Vorrichtung (10) ausgestaltet ist, das Bild zu verwenden, um die ausgewählte Vorrichtung (10a) zu identifizieren.

7. Tragbare Vorrichtung (10) nach Anspruch 5, **dadurch gekennzeichnet, dass** die Kurzbereichseinheit (40) ausgestaltet ist, eine beliebige verwendbare Verbindungsinformation aus möglichen Markierungen in dem aufgezeichneten Bild wirksam zu extrahieren.

8. Tragbare Vorrichtung (10) nach Anspruch 5, **dadurch gekennzeichnet, dass** die gerichtete Kommunikationsvorrichtung ausgestaltet ist, aufgrund des Auftretens von einem Drücken eines Knopfes auf einer Tastatur (22) der tragbaren Vorrichtung (10) durch den Benutzer; der Erfassung von mehreren nahegelegenen Vorrichtungen (10a, 10b, 10c); und/oder der Aktivierung einer Software-Anwendung.

9. Computerprogrammprodukt, welches auf einem computerverwendbarem Medium gespeichert ist, umfassend lesbare Programmittel, um zu bewirken, dass, wenn das Programmittel in eine tragbare Vorrichtung (10) umfassend:
- eine Kurzbereichssteuerung (40) und eine Kurzbereichseinheit (50) für eine drahtlose Kommunikation mit einer Gruppe von nahegelegenen Vorrichtungen (10a, 10b, 10c), welche jeweils mit einer lichtaussendenden Anordnung versehen sind, welche in der Lage ist, Licht auszusenden, welches eine verwendbare Verbindungsinformation umfasst,
- eine Antenne (52) mit im Wesentlichen kugelförmiger Richtcharakteristik, welche mit der Kurzbereichseinheit (50) für eine Kommunikation mit im Wesentlichen kugelförmiger Richtcharakteristik verbunden ist, und
- mindestens eine gerichtete Kommunikationsvorrichtung in Form einer Kameraanordnung (24) für eine im Wesentlichen gerichtete Kommunikation durch Aufzeichnen von Information, welche mittels Licht empfangen wird, wobei die gerichtete Kommunikationsvorrichtung (24) mit der Kurzbereichseinheit (50) verbunden ist,
geladen wird, eine tragbare Vorrichtung (10) die Schritte ausführt:
- Aktivieren der gerichteten Kommunikationsvorrichtung (24),
- Empfangen des Lichts, welches eine Verbindungsinformation umfasst, von der ausgewählten drahtlosen Vorrichtung (10a),
- Verbinden der tragbaren Vorrichtung (10) mit einer ausgewählten Vorrichtung (10a) durch die Verwendung der Verbindungsinformation,
- Kommunizieren mit der ausgewählten Vorrichtung (10a) über die Antenne (52) mit im Wesentlichen kugelförmiger Richtcharakteristik nach dem Verbinden.

## Revendications

1. Procédé de communication sans fil d'un dispositif portatif sans fil (10) avec un dispositif sans fil sélectionné (10a) dans un groupe de dispositifs sans fil proches (10a, 10b, 10c), chacun étant doté d'un agencement d'émission lumineuse conçu pour émettre de la lumière contenant des informations utiles pour la connexion, ledit dispositif portatif (10) étant doté d'une commande à courte portée (40) et d'une unité à courte portée (50) pour une communication sans fil avec ledit groupe de dispositifs sans fil proches (10a, 10b, 10c), d'une antenne substantiellement omnidirectionnelle connectée à ladite unité à courte portée (50) pour établir une communication substantiellement omnidirectionnelle et d'au moins un dispositif de communication directionnelle sous la forme d'un agencement de caméra (24) destiné à réaliser une communication substantiellement directionnelle en enregistrant des informations reçues sous la forme de lumière, ledit dispositif de communication directionnelle (24) étant relié à ladite unité à courte portée (50), ledit procédé, exécuté par la commande à courte portée (40) et l'unité à courte portée (50), comprenant les étapes consistant à :
- activer le dispositif de communication directionnelle (24) ;
- sélectionner un dispositif sans fil proche en dirigeant le dispositif de communication directionnelle (24) vers ledit dispositif sans fil proche (10a) ;
- recevoir la lumière contenant des informations de connexion en provenance dudit dispositif sans fil sélectionné (10a) ;
- connecter le dispositif portatif (10) au dispositif sélectionné (10a) en utilisant lesdites informations de connexion ;
- après ladite connexion, communiquer avec le dispositif sélectionné (10a) via l'antenne substantiellement omnidirectionnelle (52).

2. Procédé selon la revendication 1, **caractérisé par** l'étape consistant à utiliser la caméra (24) pour la communication directionnelle en enregistrant une image du dispositif sélectionné (10a), ladite image étant utilisée par le dispositif portatif (10) pour identifier le dispositif sélectionné (10a).

3. Procédé selon la revendication 2, **caractérisé par** l'étape consistant à extraire toutes informations utiles pour la connexion d'éventuels marquages dans l'image enregistrée.

4. Procédé selon la revendication 1, **caractérisé par** l'étape consistant à activer le dispositif de communication directionnelle lorsqu'il se produit au moins un des événements suivants : actionnement par l'utilisateur d'un bouton du clavier (22) du dispositif portatif (10), détection de plusieurs dispositifs proches (10a, 10b, 10c), activation d'une application logicielle.

5. Dispositif portatif sans fil (10) conçu pour être connecté en service avec un dispositif sans fil sélectionné (10a) dans un groupe de dispositifs sans fil proches (10a, 10b, 10c), chacun étant doté d'un agencement d'émission lumineuse conçu pour émettre de la lumière contenant des informations utiles pour la connexion, ledit dispositif portatif (10) comprenant une commande à courte portée (40) et une unité à courte portée (50) pour une communication sans fil avec ledit groupe de dispositifs sans fil proches (10a, 10b, 10c), et une antenne substantiellement omnidirectionnelle connectée à ladite unité à courte portée (50) pour établir une communication substantiellement omnidirectionnelle avec lesdits dispositif sans fil proches (10a, 10b, 10c), et comprenant en outre :
au moins un dispositif de communication substantiellement directionnelle sous la forme d'un agencement de caméra (24) destiné à réaliser une communication directionnelle en enregistrant des informations reçues sous la forme de lumière, ledit dispositif de communication directionnelle (24) étant relié à ladite unité à courte portée (50) et étant conçu pour être dirigé en service vers un dispositif sans fil proche (10a), qui se trouve ainsi sélectionné ; et
la commande à courte portée (40) et l'unité à courte portée (50) étant conçues pour, en service :
- activer le dispositif de communication directionnelle (24) afin de recevoir la lumière contenant des informations de connexion en provenance dudit dispositif sans fil sélectionné (10a) ;
- connecter le dispositif portatif (10) au dispositif sélectionné (10a) en utilisant lesdites informations de connexion ;
- après ladite connexion, communiquer avec le dispositif sélectionné (10a) via l'antenne substantiellement omnidirectionnelle (52).

6. Dispositif portatif (10) selon la revendication 5, **caractérisé en ce que** la caméra (24) est conçue pour effectuer une communication directionnelle en enregistrant une image du dispositif sélectionné (10a) et **en ce que** le dispositif portatif (10) est conçu pour utiliser ladite image pour identifier le dispositif sélectionné (10a).

7. Dispositif portatif (10) selon la revendication 5, **caractérisé en ce que** l'unité à courte portée (50) est conçue pour extraire en service des informations utiles pour la connexion d'éventuels marquages dans l'image enregistrée.

8. Dispositif portatif (10) selon la revendication 5, **caractérisé en ce que** le dispositif de communication directionnelle est conçu pour être activé lorsque se produit au moins un des événements suivants : actionnement par l'utilisateur d'un bouton du clavier (22) du dispositif portatif (10), détection de plusieurs dispositifs proches (10a, 10b, 10c), activation d'une application logicielle.

9. Progiciel d'ordinateur stocké sur un support utilisable par ordinateur, comprenant un moyen de programme lisible, destiné, lorsque ledit moyen de programme est chargé dans un dispositif portatif (10) comprenant :
une commande à courte portée (40) et une unité à courte portée (50) pour une communication sans fil avec ledit groupe de dispositifs sans fil proches (10a, 10b, 10c), chacun étant doté d'un agencement d'émission lumineuse conçu pour émettre de la lumière contenant des informations utiles à la connexion ;
une antenne substantiellement omnidirectionnelle (52) connectée à ladite unité à courte portée (50) pour établir une communication substantiellement omnidirectionnelle ; et
au moins un dispositif de communication directionnelle sous la forme d'un agencement de caméra (24) destiné à réaliser une communication substantiellement directionnelle en enregistrant des informations reçues sous la forme de lumière, ledit dispositif de communication directionnelle (24) étant relié à ladite unité à courte portée (50) ;
à commander au dispositif portatif (10) d'exécuter les étapes consistant à :
- activer le dispositif de communication directionnelle (24) ;
- recevoir la lumière contenant des informations de connexion en provenance du dispositif sans fil sélectionné (10a) ;
- connecter le dispositif portatif (10) au dispositif sélectionné (10a) en utilisant lesdites informations de connexion ;
- après ladite connexion, communiquer avec le dispositif sélectionné (10a) via l'antenne substantiellement omnidirectionnelle (52).
